# EUROPEAN PATENT APPLICATION

(11) **EP 4 530 545 A1**
(43) Date of publication of application: **02.04.2025**
(21) Application number: 23839836.6
(22) Date of filing: 23.06.2023
(51) Int. Cl.: F24F 8/80, F24F 13/20, F24F 13/08, F24F 13/28, A47B 37/00, B01D 46/00, B01D 46/42

(54) **AIR PURIFIER**

(30) Priority: 14.07.2022 KR 20220087013
(71) Applicant: LG Electronics Inc., Yeongdeungpo-gu Seoul 07336 (KR)
(72) Inventor: KIM, Hoojin, Seoul 08592 (KR); PARK, Jeongtaek, Seoul 08592 (KR)
(74) Representative: Vossius & Partner Patentanwälte Rechtsanwälte mbB
(86) International application number: PCT/KR2023/008773
(87) International publication number: WO 2024/014742

(57) **Abstract**

An air cleaner according to an embodiment of the present disclosure includes a first body having an intake port formed in a perimeter wall and a discharge port open upward, a filter disposed inside the first body and facing the intake port, a blowing fan disposed between the intake port and the discharge port to form an air flow from the intake port to the discharge port inside the first body, a blowing motor disposed inside the first body and rotating the blowing fan, and a second body disposed above the first body, wherein the first body includes a plurality of vanes disposed at the discharge port and guiding a flow direction of air discharged from the discharge port, and one end of one of the vanes is inclined to be close to another end of another vane disposed adjacently.

## Description

### [Technical Field]

The present disclosure relates to an air cleaner, and more specifically, to an air cleaner that allows utilization of the space above the air cleaner.

### [Background Art]

An air cleaner is a device that creates an air flow and filters the flowing air to improve the cleanliness of the air in a certain space.

An air cleaner may have a configuration in which an intake port is formed on one side, a discharge port is formed on the other side, and a filter is disposed inside.

In air cleaners, a discharge port may be formed on the upper side such that filtered air discharged upward through the discharge port can flow in all directions to rapidly increase the cleanliness of the indoor space. Additionally, when a discharge port is formed on the upper side, a fan for controlling an air direction can be additionally provided on the upper side to send filtered air a long distance.

The "air cleaner" disclosed in Korean Patent Publication No. 2021-0140930 includes a cylindrical body, a discharge port open at the top of the body, an annular discharge grill on which the discharge port is formed and which forms an upper surface of the body, and an operating unit disposed on a flat surface surrounded by the annular discharge grill.

Air cleaners require a significant volume to ensure air cleaning performance within a certain space. Accordingly, there is a problem in that a large-volume air cleaner occupies a significant portion of the space, resulting in low space utilization.

In the prior art described above, the discharge port is formed on the upper surface of the body, making it difficult to utilize the top surface of the air cleaner. In addition, since the operating unit is disposed at the center of the annular discharge port, there is a problem in that it is difficult to utilize even the narrow flat surface at the top of the air cleaner.

Additionally, in order to increase utilization of the space occupied by an air cleaner, another member with a storage space may be placed on the upper side of the air cleaner. However, the air discharged upward collides with the member, and thus the discharged air cannot reach a long distance, which directly leads to a decrease in the performance of the air cleaner.

The "air cleaner" disclosed in Korean Patent Publication No. 2022-0007363 includes a long elongated cylindrical body, a discharge port open at the top of the body, an annular discharge grill on which the discharge port is formed and which forms an upper surface of the body, and a flat surface surrounded by the annular discharge grill.

However, in the prior art described above, the height of the body is high, making it difficult to utilize the top surface of the body. Additionally, the upper surface of the body is narrow and thus is not suitable for storing items. If a structure with a larger area than the upper surface is placed on the upper surface, the discharge port is blocked, which reduces the performance of the air cleaner.

Korean Patent Publication No. 10-2021-0140930 A (publication date 2021. 11. 23.)

Korean Patent Publication No. 10-2022-0007363 A (publication date 2022. 01. 18.)

### [Disclosure]

### [Technical Problem]

An object of the present disclosure is to provide an air cleaner that can solve the problems of the prior art described above.

An object of the present disclosure is to improve the efficiency of an air cleaner.

Another object of the present disclosure is to provide an air cleaner for preventing air discharged from a discharge port from re-entering an intake port.

Another object of the present disclosure is to provide an air cleaner with improved discharged air control performance.

Another object of the present disclosure is to provide an air cleaner with improved space utilization.

Another object of the present disclosure is to provide an air cleaner that allows utilization of an upper space.

Another object of the present disclosure is to provide an air cleaner for improving flow interference with discharged air.

Another object of the present disclosure is to provide an air cleaner for improving the convenience and comfort of occupants.

The objects of the present disclosure are not limited to the objects mentioned above, and other objects that are not mentioned will be clearly understood by those skilled in the art from the description below.

### [Technical Solution]

According to one aspect of the present disclosure for achieving the above objects, an air cleaner includes a first body having an intake port and a discharge port open upward, a filter facing the intake port, a blowing fan disposed between the intake port and the discharge port to form an air flow from the intake port to the discharge port, a blowing motor disposed inside the first body and rotating the blowing fan, and a second body disposed above the first body.

The first body is disposed at the discharge port and includes a plurality of vanes that guides a flow direction of air discharged from the discharge port.

One end of one of the plurality of vanes is inclined to approach the other end of another vane disposed adjacently.

The discharge port may be an annular discharge port.

The plurality of vanes may be radially disposed at the annular discharge port and may be inclined in the rotation direction of the blowing fan.

Each of the plurality of vanes may be disposed with an inner end inclined at a first angle in the vertical direction and an outer end inclined at a second angle in the vertical direction.

According to one aspect of the present disclosure for achieving the above objects, an air cleaner includes a first body having an intake port and a discharge port open upward, a blowing fan disposed inside the first body below the discharge port and forming an air flow from the intake port to the discharge port, a blowing motor disposed inside the first body and rotating the blowing fan, and a plurality of vanes disposed at the discharge port.

Each of the plurality of vanes has a positive pressure surface facing a direction from which air flows, a negative pressure surface opposite to the positive pressure surface, one end connecting the positive pressure surface and the negative pressure surface and forming the length of the vane, and another end opposite to the one end, wherein the thickness between the positive pressure surface and the negative pressure surface may vary from the one end to the other end.

Specific details of other embodiments are included in the detailed description and drawings.

### [Advantageous Effects]

According to at least one embodiment of the present disclosure, a discharge grill is inclined in a direction opposite to the guide wall, and thus loss of discharged air can be prevented to improve the efficiency of the air cleaner.

According to at least one embodiment of the present disclosure, the guide wall of the second body guides the air discharged from the discharge port, thereby improving the discharged air control performance.

According to at least one embodiment of the present disclosure, the edge of the guide wall of the second body is located outside the circumferential surface of the first body, and thus the discharged air is separated from the intake port and does not re-enter the intake port.

According to at least one embodiment of the present disclosure, the intake port and the discharge port are disposed to be spaced apart from each other, and thus it is possible to prevent the discharged air from re-entering the intake port.

According to at least one embodiments of the present disclosure, space utilization can be improved by the second body.

According to at least one embodiment of the present disclosure, space utilization can be improved by a flat surface formed on the top of the air cleaner.

According to at least one embodiment of the present disclosure, the vanes of the discharge grill are disposed to be inclined, and thus flow interference of discharged air can be improved.

The effects of the present disclosure are not limited to the effects mentioned above, and other effects that are not mentioned will be clearly understood by those skilled in the art from the description of the claims.

### [Description of Drawings]

FIG. 1 is a perspective view of an air cleaner according to an embodiment of the present disclosure.
FIG. 2 is an elevation view of the air cleaner according to an embodiment of the present disclosure.
FIG. 3 is a cross-sectional view taken along line A1-A2 in FIG. 1.
FIG. 4 is a plan view of a first body according to an embodiment of the present disclosure.
FIG. 5 is an elevation cross-sectional view taken along line B1-B2 of a discharge grill in FIG. 4.
FIG. 6 is a cross-sectional view of a vane taken along line C1-C2 in FIG. 4.
FIG. 7 is a cross-sectional view of a vane according to another embodiment of the present disclosure.
FIG. 8 is a cross-sectional view taken along line A1-A2 in FIG. 1.
FIG. 9 is a perspective view of a first body according to an embodiment of the present disclosure.
FIG. 10 is a perspective view of a blowing fan according to an embodiment of the present disclosure.
FIG. 11 is a cross-sectional perspective view of a blowing housing according to an embodiment of the present disclosure.
FIG. 12 is an enlarged view of a guide vane according to an embodiment of the present disclosure.
FIG. 13 is a cross-sectional perspective view of an upper housing according to an embodiment of the present disclosure.
FIG. 14 is a perspective view of the blowing fan, the blowing housing, and the upper housing according to an embodiment of the present disclosure.
FIG. 15 is a cross-sectional view of an air cleaner according to another embodiment of the present disclosure.
FIG. 16 is a cross-sectional view of an air cleaner according to another embodiment of the present disclosure.

### [Mode for Disclosure]

Hereinafter, embodiments disclosed in the present specification will be described in detail with reference to the attached drawings. However, identical or similar components will be assigned the same reference numeral, and redundant descriptions thereof will be omitted.

The suffixes "module" and "unit" of elements herein are used for convenience of description and thus can be used interchangeably and do not have any distinguishable meanings or functions.

In the following description of the embodiments disclosed in the present specification, a detailed description of known functions and configurations incorporated herein will be omitted when it may obscure the subject matter of the present disclosure. In addition, the accompanying drawings are provided only for ease of understanding of the embodiments disclosed in the present specification, do not limit the technical spirit disclosed herein, and include all changes, equivalents and substitutes included in the spirit and scope of the present disclosure.

The terms "first" and/or "second" are used to describe various components, but such components are not limited by these terms. The terms are used to discriminate one component from another component.

When a component is "coupled" or "connected" to another component, it should be understood that a third component may be present between the two components although the component may be directly coupled or connected to the other component. When a component is "directly coupled" or "directly connected" to another component, it should be understood that no element is present between the two components.

An element described in the singular form is intended to include a plurality of elements unless the context clearly indicates otherwise.

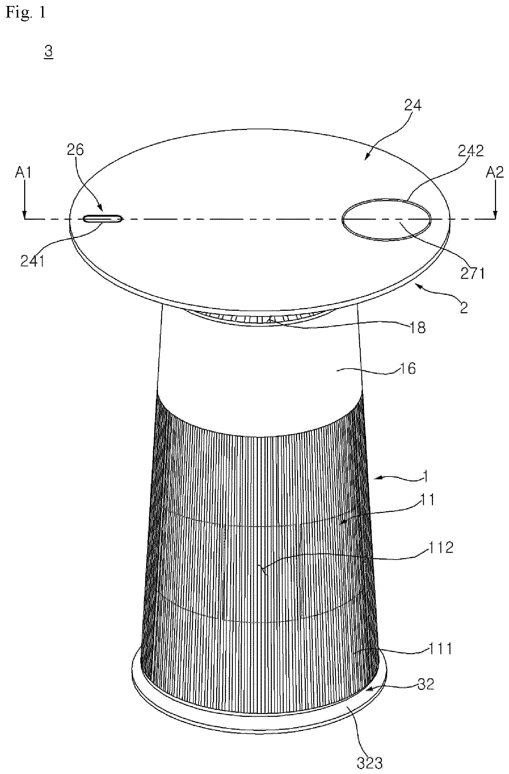

An air cleaner 3 will be described with reference to FIG. 1.

The air cleaner 3 includes a first body 1 provided with an intake port 112 and a discharge port 17.

The first body 1 may extend high. The height of the first body 1 may be greater than the width thereof. For example, the first body 1 may have a cylindrical shape extending long in the height direction.

The first body 1 may include a perimeter wall formed along the circumference. The perimeter wall may be an outer wall of the first body 1. The perimeter wall may include an upper housing 16. The perimeter wall may include a lower housing 11. For example, the first body 1 may include the upper housing 16 and the lower housing 11, and the perimeter wall may include the outer wall of the upper housing 16 and the lower housing 11. For example, the perimeter wall may have a cylindrical shape extending long in the height direction.

The first body 1 may be formed in a cylindrical shape, a rectangular parallelepiped shape, a pyramid shape, or a cubic shape. The first body 1 is not limited thereto and may be formed in various shapes. The first body 1 may become narrower toward the top. For example, the first body 1 may have a cylindrical shape whose width becomes narrower toward the top.

The intake port 112 may be formed on the perimeter wall of the first body 1. The intake port 112 may be formed by opening a portion of the perimeter wall of the first body 1. The intake port 112 may communicate with the inside and outside of the first body. For example, the intake port 112 is formed by cutting a portion of the perimeter wall of the first body 1 to communicate with the inside and the outside of the first body 1, and air can be supplied from the outside to the inside through the intake port 112.

The intake port 112 may be formed along the circumference of the perimeter wall of the first body 1. The intake port 112 may be formed on one side of the perimeter wall of the first body 1. A plurality of intake ports 112 may be formed on the perimeter wall of the first body 1. For example, based on the center of the first body in the height direction, four intake ports 112 may be open in all directions on the perimeter wall.

The intake port 112 may be disposed on the lower side of the first body 1. For example, the intake port 112 may be spaced downward from the center of the first body 1 in the height direction and may be formed by opening a portion of the perimeter wall.

Accordingly, contaminated air with high density can easily be introduced into the air cleaner through the intake port disposed on the lower side of the first body 1.

A louver 111 may be formed in the intake port 112. The louver 111 may be formed on the outer side of the intake port 112. The louver 111 may be formed along the circumference of the perimeter wall of the first body 1. The louver 111 may extend long in the height direction of the first body 1. A plurality of louvers 111 may be disposed along the circumference of the perimeter wall. Air can flow through gaps between the plurality of louvers 111. For example, a plurality of louvers extending long in the height direction of the first body 1 may be disposed along the circumference of the perimeter wall of the first body 1, and the outside air can enter the first body 1 through the gaps formed between the plurality of louvers 111.

Accordingly, dust or foreign substances flowing into the intake port 1 can be filtered by the louvers 111.

The intake port 1 may be formed on one side of the first body, and the discharge port 17 may be formed on the other side of the first body 1. The discharge port 17 may be disposed to be spaced apart from the intake port 112.

The discharge port 17 may be formed by opening the first body 1. The discharge port 17 may be formed by opening the upper surface and perimeter wall of the first body 1. A part of the discharge port 17 may be formed by opening the top of the first body 1. For example, the discharge port 17 may be formed by opening the first body 1 upward.

The intake port 112 may be open on one side, and the discharge port 17 may be open on the other side. For example, the intake port 112 may be open in the perimeter wall of the first body 1, and the discharge port 17 may be open on the upper side of the first body 1.

Accordingly, air is sucked into the side of the first body 1 and discharged upward, and thus the discharged air can be prevented from re-entering the intake port 112.

The discharge port 17 may have the shape of the cross section of the first body 1. The discharge port 17 may be formed to be smaller than the cross section of the first body 1. The discharge port 17 may be formed by opening a portion of the upper surface of the first body 1. For example, the discharge port 17 may be formed in an annular shape on the upper side of the cylindrical first body 1.

The first body 1 may include the lower housing 11. The lower housing 11 may form a part of the perimeter wall of the first body 1. The intake port 112 may be formed on the perimeter wall of the lower housing 11. The lower housing 11 may be formed in a shape with a narrow upper part and a wide lower part. The louvers 111 may be disposed on the perimeter wall of the lower housing 11. The louvers 111 may be disposed in the intake port 112 formed on the perimeter wall of the lower housing 11. For example, the lower housing 11 may include the perimeter wall on which the intake port 112 is formed, and louvers 111 extending in the height direction of the first body 1 and disposed along the circumference of the perimeter wall.

The first body 1 may include the upper housing 16. The upper housing 16 may be a part of the first body 1. The upper housing 16 may form a part of the perimeter wall. For example, the perimeter wall of the first body 1 may include the lower housing 11 and the upper housing 16.

A discharge grill 18 may be connected to the upper housing 16. For example, the upper housing 16 may form the upper part of the first body 1, and the discharge grill 18 may be connected to the upper edge of the upper housing 16.

The air cleaner 3 may include a second body 2 disposed above the first body 1. The second body 2 may have a flat upper surface. The second body 2 may have the shape of a table. For example, the second body 2 may have the shape of a table with a flat upper surface.

Accordingly, space utilization of the air cleaner can be improved.

The second body 2 may cover the first body 1. The second body 2 may extend in the lateral direction. The width of the second body 2 may be greater than the width of the first body 1. The edge of the second body 2 may be located outside the perimeter wall of the first body 1. For example, the width of the second body 2 may be greater than the width of the first body 1, and the second body 2 may have a circular table shape in which the edge of the upper surface is located outside the perimeter wall of the first body 1.

The second body 2 may include an upper surface. The upper surface of the second body 2 may be formed to be flat. The second body 2 may include a plate 24 with a flat surface. The plate 24 may cover the second body 2. For example, the plate 24 may be a disk extending in the lateral direction to cover the second body 2.

The air cleaner 3 may include an indicator 26. The indicator 26 can deliver information on the air cleaner 3 to a user. The indicator 3 may visually deliver information on the air cleaner 3 to the user. For example, the indicator 26 may be a display that visually displays operating state information of the air cleaner 3.

The indicator 26 may be disposed on one side of the air cleaner 3. The indicator 26 may be disposed on the second body 2. The indicator 26 may face the upper side. The indicator 26 may be disposed on the upper surface of the second body 2. The indicator 26 may be inserted into a slot 241 formed on the upper surface of the second body 2. For example, the indicator 26 may extend long and may be disposed in the slot 241 formed on the upper surface of the second body 2.

The air cleaner 3 may include a charging pad 271. The charging pad 271 can charge electronic devices. The charging pad 271 can charge electronic devices wirelessly without a connection terminal. For example, the charging pad 271 may be a wireless charging module.

The charging pad 271 may be disposed on one side of the air cleaner 3. The charging pad 271 may be disposed on one side of the second body 2. The charging pad 271 may be disposed on the upper surface of the second body 2. The charging pad 271 may form the upper surface of the second body 2. The charging pad 271 may be inserted into a pad hole 242 formed in the second body 2. For example, the charging pad 271 may be inserted into the circular pad hole 242 formed on the upper surface of the second body 2 to form the upper surface of the second body 2.

The air cleaner 3 may include a base 32 supporting the first body 1. The base 32 can support the load of the air cleaner 3. The base 32 can support the loads of the first body 1 and the second body 2.

The base 32 may be disposed on the lower side of the first body 1. The base 32 may form the lower end of the first body 1. The width of the base 32 may be greater than the width of the first body 1. The edge of the base 32 may be located outside the perimeter wall of the first body 1. For example, the first body 1 may have a shape with a narrow upper part and a wide lower part, and the width of the base 32 may be greater than the width of the lower end of the first body 1.

The base 32 may extend in laterally. The base 32 may include a sloped wall 323 that slopes downward toward the outside. The edge of the sloped wall 323 may be located outside the perimeter wall of the first body 1.

Accordingly, it is possible to prevent the air cleaner 3 from falling.

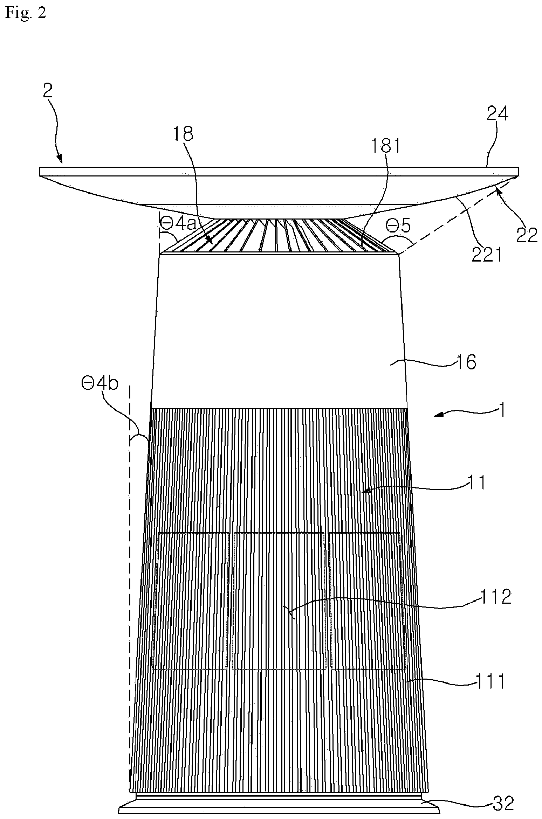

The air cleaner 3 will be described with reference to FIG. 2.

The air cleaner 3 may include the discharge port 17 that opens upward. The discharge port 17 may be disposed on the upper side of the first body 1. The discharge port 17 may be disposed to face the second body 2. The discharge port 17 may be disposed to face the lower surface of the second body 2. For example, the discharge port 17 may be open on the upper side of the first body 1 and face the lower surface of the second body 2.

Accordingly, the discharged air flows along the lower surface of the second body 2, and the discharge air can be prevented from re-entering the intake port 112.

The discharge port 17 may be disposed obliquely. The discharge port 17 may be inclined. The discharge port 17 may open toward the top of the first body 1 and may be inclined toward the outer side of the first body 1. The discharge port 17 may be inclined to one side from the connection point of the second body 2 and the first body 1. For example, the annular discharge port 17 may be inclined downward toward the outer side of the first body 1 at the connection portion of the first body 1 and the second body 2.

Accordingly, the discharged air flows along the lower surface of the second body 2, and the discharged air can be prevented from re-entering the intake port 112.

The discharge port 17 may be formed in an annular shape. The discharge port 17 may have an annular shape having the axis of a blowing fan 12 as a center. The discharge port 17 may be formed in a square shape. The discharge port 17 may be formed in a circular shape. The discharge port 17 is not limited thereto and may be formed in various shapes. For example, the first body 1 may be cylindrical and elongated in the height direction, and the discharge port 17 may be annular and open on the upper side of the first body 1.

Accordingly, discharge airflow is formed in all directions, and the efficiency of the air cleaner can be improved.

A discharge grill 18 may be disposed above the discharge port 17. The discharge grill 18 may be disposed on the top of the first body 1. The discharge grill 18 may form the upper part of the first body 1. For example, the discharge port 17 is an annular discharge port 17 that opens on the upper side of the first body 1, and the annular discharge grill 18 may be disposed on the upper side of the discharge port 17.

The discharge grill 18 may be provided with a plurality of vanes 181 that extend long. The plurality of vanes 181 may extend long in the radial direction of the first body 1. The plurality of vanes 181 may be radially disposed on the discharge grill 18. The plurality of vanes 181 may extend from the perimeter wall of the first body 1 toward the center of the first body 1. The plurality of vanes 181 may extend from the side of a column 21 of the second body 2 toward the perimeter wall of the first body 1. For example, the discharge port 17 and the discharge grill 18 are annular, and the plurality of vanes 181 may extend from the upper end of the perimeter wall of the first body 1 toward the center of the first body 1.

The discharge grill 18 may be inclined upward from the perimeter wall of the first body 1 toward the center of the first body 1. The discharge grill 18 may be inclined downward with increasing distance to the center of the first body 1. The discharge grill 18 may rise from the outside to the inside. The inner circumference of the discharge grill 18 may be positioned higher than the outer circumference thereof. For example, the discharge grill 18 may have a conical shape with a sharp top cut off, and the plurality of vanes 181 may be disposed radially therein.

The plurality of vanes 181 may be inclined such that the airflow raised by the blowing fan 12 is discharged obliquely upward in the circumferential direction of the first body 1. For example, the plurality of vanes 181 may be inclined such that the airflow raised by the blowing fan 12 is discharged obliquely upward in the rotation direction of the blowing fan 12.

The plurality of vanes 181 may be inclined downward toward the outside of the first body 1. The longitudinal direction of the vanes 181 may be inclined downward toward the outside of the first body 1. The longitudinal direction refers to the direction in which the vanes 181 extend from the center of the first body 1 toward the outside of the first body 1. The longitudinal direction may be a radial direction. The longitudinal direction of the vanes 181 may be inclined upward or downward with respect to the horizontal direction. The longitudinal direction of the vanes 181 may be parallel to a virtual surface of the discharge grill 181.

An imaginary straight line connecting the lower end of the vanes 181 in the longitudinal direction and the end of a guide wall 221 may form an obtuse angle θ5 with the longitudinal direction of the vanes 181. The imaginary straight line may be parallel to the longitudinal direction of the vanes.

Accordingly, the air discharged through the discharge grill can be guided by the guide wall.

The perimeter wall of the first body 1 may be inclined inward toward the upper side. An angle θ4a at which the vanes 181 are inclined in the vertical direction may be greater than an angle θ4b at which the perimeter wall of the first body 1 is inclined inward in the vertical direction.

The plurality of vanes 181 may extend downward toward the outer side of the first body 1 in the radial direction.

The second body 2 may extend in the lateral direction. The second body 2 may include a lower cover 22 that forms the appearance of a table. The lower cover 22 may extend in the lateral direction. The lower cover 22 may include a lower surface extending laterally.

The lower cover 22 may be formed to have a thickness that decreases toward the edge.

The lower cover 22 may include the guide wall 221 that forms the lower surface. The guide wall 221 may extend in the lateral direction. The guide wall 221 may extend from the top of the first body 1. The guide wall 221 may extend to the outer side of the first body 1. The edge of the guide wall 221 may be located outside the perimeter wall of the first body 1. The outer edge of the guide wall 221 may be located outside the outer edge of the discharge grill 18.

The guide wall 221 may face downward. The guide wall may face the first body 1. The guide wall 221 may be inclined. For example, the guide wall 221 may extend upward toward the outer side of the first body 1.

The lower cover 22 may extend from one end of the discharge port 17. The lower cover 22 may extend from one end of the discharge grill 18.

One end of the discharge grill 18 may be connected to the lower cover 22. The lower cover 22 may be spaced upward from the other end of the discharge grill 18.

The discharge port 17 and the guide wall 221 may form an acute angle.

The discharge grill 18 and the guide wall 221 may be connected. The upper end of the discharge grill 18 may be connected to the lower part of the guide wall 221. The discharge grill 18 and the guide wall 221 may form an acute angle. The guide wall 221 extends from one side of the discharge grill 18, and the discharge grill 18 and the guide wall 221 may form an acute angle at the one side. The angle formed by the guide wall 221 and the discharge grill 18 may increase as it moves from the one side to the edge of the guide wall 221. For example, the discharge grill 18 disposed on the upper side of the first body 1 is connected to the second body 2, and the discharge grill 18 and the guide wall 221 of the second body 2 may form an acute angle at the connection point.

The vanes 181 may form an acute angle with the guide wall 221.

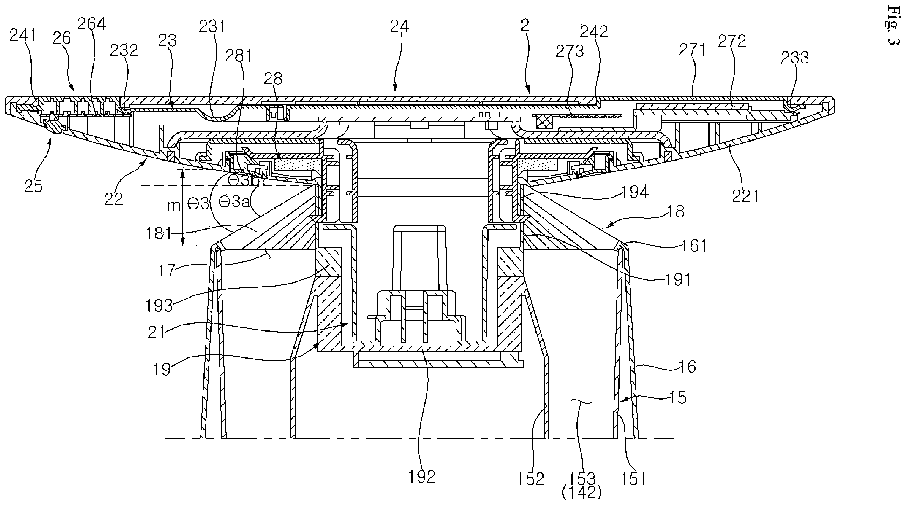

The air cleaner 3 will be described with reference to FIG. 3.

The discharge grill 18 may be disposed toward the second body 2. The discharge grill 18 may face the second body 2. The discharge grill 18 may be disposed on the upper side of the first body 1. The discharge grill 18 may form the upper surface of the first body 1.

The discharge grill 18 may be disposed to be spaced apart from the second body 2. The discharge grill 18 may be spaced apart from the lower cover 22 of the second body 2. The discharge grill 18 may be spaced apart from the lower cover 22 by a predetermined distance m. The lower cover 22 may be spaced upward from the discharge grill 18 by the predetermined distance m. The vertical distance m between the lower cover 22 and the discharge grill 18 may increase toward the outer side of the first body 1 in the radial direction. The vertical distance m between the guide wall 221 and the discharge grill 18 may increase toward the outer side of the first body 1 in the radial direction. For example, the discharge grill 18 may be formed to be inclined downward toward the outer side of the first body 1, the lower cover 22 is formed to be inclined upward toward the outer side of the first body 1, and the vertical distance m between the guide wall 221 and the discharge grill 18 may increase toward the outer side of the first body 1 in the radial direction.

The lower cover 22 may be formed to be convex downward.

The guide wall 221 may be formed obliquely with respect to the radial direction of the second body 2. The guide wall 221 may be inclined with respect to the radial direction of the second body 2. The guide wall 221 may be inclined upward toward the edge. The guide wall 221 may extend upward with increasing distance to the center of the first body 1.

The guide wall 221 may be curved. For example, the guide wall 221 may be formed to be convex downward.

The guide wall 221 may have greater curvature toward the edge.

Accordingly, the discharge airflow can be formed along the guide wall 221 to the edge of the lower cover 22 by the Coanda effect.

The angle θ3b formed between the guide wall 221 and the radial direction of the first body 1 may be greater than 0. The angle θ3b formed between the guide wall 221 and the radial direction of the first body 1 may be variable. The angle θ3b formed between the guide wall 221 and the radial direction of the first body 1 may increase toward the edge of the guide wall 221.

The vanes 181 may extend long from the inside of the first body 1 toward the outside. The vanes 181 may extend long outward from the center of the first body 1. The vanes 181 may extend long from a holder edge 194 to a housing edge 161. The vanes 181 may extend long from the housing edge 161 to the holder edge 194.

The angle formed between the direction in which the guide wall 221 extends and the longitudinal direction of the vanes 181 may be an acute angle. The longitudinal direction of the vanes 181 may be from the housing edge 161 toward the holder edge 194, or from the holder edge 194 toward the housing edge 161. The longitudinal direction of the vanes 181 may be referred to as the extension direction of the vanes 181.

The angle θ3a formed between the longitudinal direction of the vanes 181 and the radial direction of the first body 1 may be greater than 0.

The angle θ3a formed between the longitudinal direction of the vanes 181 and the radial direction of the first body 1 may be greater than the angle θ3b formed between the guide wall 221 and the radial direction of the first body 1. The difference between the angle θ3a formed by the longitudinal direction of the vanes 181 and the radial direction of the first body 1 and the angle θ3b formed by the guide wall 221 and the radial direction of the first body 1 may decrease toward the edge of the wall 221.

The discharge grill 18 may be composed of the plurality of vanes 181. The cross-sectional shape of the discharge grill 18 may correspond to the cross-sectional shape of the first body 1. For example, the first body 1 may have a cylindrical shape, and the discharge grill 18 may be a circular discharge grill 18 corresponding to the first body 1.

The discharge grill 18 may be connected to the first body 1 and the second body 2. The discharge grill 18 may connect the upper housing 16 of the first body 1 and the lower cover 22 of the second body 2. The discharge grill 18 may be connected to the edge of the upper housing 16. The discharge grill 18 may be connected to one end of the lower cover 22.

The air cleaner 3 may include an inner body 15 disposed inside the upper housing 16. The inner body 15 may be disposed inside the upper housing 16 and connected to the edge of the upper housing 16. For example, the upper edge of the inner body 15 may be connected to the upper edge of the upper housing 16.

The inner body 15 may include a discharge passage 153. The inner body 15 may include an inner cover 152 as an inner wall and an inner housing 151 as an outer wall. The discharge passage 153 may be formed by the inner cover 152 and the inner housing 151. The discharge passage 153 may be disposed between the inner cover 152 and the inner housing 151. For example, the inner body 15 may include the cylindrical inner cover 152, the cylindrical inner housing 151 having a diameter larger than that of the inner cover 152, and the annular discharge passage 153 formed between the inner cover 152 and the inner housing 151.

The inner cover 152 may be part of a holder 19. The holder 19 may include the inner cover 152 and the upper housing 16. The holder 18 may include the discharge grill 18. For example, the holder 19 may include a holder base 192, the inner cover 152 including a portion of a holder wall 191, and the upper housing 16 including the remaining portion of the holder wall 191 and the holder edge 194.

The discharge grill 18 may be disposed at an end of the discharge passage 153. For example, the discharge grill 18 may be disposed at an end of the discharge passage 153 disposed on the upper side of the first body 1.

The first body 1 and the second body 2 can be separated from each other.

The first body 1 may include the holder 19 that fix the second body 2. The column 21 of the second body 2 can be inserted into the holder 19.

The holder 19 may be formed by being depressed from the upper surface of the first body 1 to the lower side. The holder 19 may be open on one side inside the first body 1. For example, the holder 19 may be formed open to the upper side of the first body 1.

The holder 19 may be disposed at the upper part of the first body 1. The holder 19 may be formed on the upper surface of the first body 1. The holder 19 may be raised from the upper surface of the first body 1. The holder wall 191 may be formed to be higher than the height of the first body 1. The upper end of the holder 19 may be disposed higher than the upper end of the perimeter wall of the first body 1. The upper end of the holder 19 may be the holder edge 194. For example, the holder edge 194 may be disposed higher than the housing edge 161.

The holder 19 may be disposed at a position corresponding to the center of the first body 1. For example, the holder 19 may be formed in a cylindrical shape on the upper side of the first body 1 and disposed at a position corresponding to the center of the first body 1 in the height direction.

The holder 19 may include the holder base 192 and the holder wall 191. The holder wall 191 may be formed in a shape corresponding to the first body 1. The holder 19 may be smaller than the first body 1. For example, the holder 19 may have a cylindrical shape corresponding to the cylindrical first body 1 and may be formed to be smaller than the first body 1.

The vanes 181 may be radially disposed between the holder 19 and the perimeter wall of the first body 1. The vanes 181 may be connected to the holder 19. The vanes 181 may be connected to the upper end of the holder 19. The upper end of the holder 19 may be the holder edge 194. The vanes 181 may have one end connected to the upper end of the holder 19 and the other end connected to the upper end of the perimeter wall of the first body 1. The one end and the other end may face each other.

The vanes 181 may be connected to the holder edge 194 and the housing edge 161. One end of each of the plurality of vanes 181 may be connected to the holder edge, and the other end may be connected to the housing edge. For example, the holder edge 194 may be formed higher than the housing edge 161, and the vanes 181 may be obliquely connected from the upper holder edge 194 to the lower housing edge 161.

The lower cover 22 may be connected to the holder edge 194. The lower cover 22 may extend from the holder edge 194. The guide wall 221 may extend from the holder edge 194 in the lateral direction. The discharge grill 18 and the guide wall 221 may be connected to form an acute angle at the holder edge 194. For example, the discharge grill 18 formed to be inclined downward toward the outer side of the first body 1 and the guide wall 221 formed to be inclined upward toward the outer side of the first body 1 may be connected at the holder edge 194 and form an acute angle.

The second body 2 may include the column 21 inserted into the holder 19 of the first body 1. The column 21 has a shape that corresponds to the shape of the holder 19 and may be smaller than the holder 19. The column 21 of the second body 2 may be inserted into and fixed to the holder 19. The holder wall 191 may be in contact with the outer surface of the column 21. For example, the column 21 may be formed in a smaller cylindrical shape to be fixed to the cylindrical holder 19.

The vanes 181 may be disposed between the column 21 and the perimeter wall of the first body 1. The vanes 181 may be disposed between the holder 19 into which the column 21 is inserted and the perimeter wall of the first body 1. The upper end of the holder 19 may be positioned higher than the upper end of the perimeter wall of the first body 1. One end of each vane 181 adjacent to the column 21 may be disposed higher than the other end. The other end may face the one end. For example, one end of each of the plurality of radially disposed vanes 181 adjacent to the column 21 may be disposed higher than the other end.

The holder 19 may include a guide column 193 that guides a coupling direction of the column 21. The guide column 193 may be disposed inside the holder 19. The guide column 193 may be formed on the inner wall of the holder 19. A plurality of guide columns 193 may be formed. For example, the guide columns 193 may be in contact with the inner wall of the holder 19, may be spaced apart from each other, and may be disposed at opposing positions.

The second body 2 may include a hook 28 that allows the second body 2 to be removed from the first body 1. The hook 28 may be disposed on the inner side of the lower cover 22 adjacent to the column 21. The hook 28 may include a hook portion (not denoted) that protrudes to the outside of the column 21. The hook portion may be inserted into a locking portion (not marked) formed on the inner wall of the holder 19. The second body 2 may include a hook button 241 that is disposed on the guide wall 221 and operates the hook portion of the hook 28. The hook button 281 may be disposed to face the first body 1. The hook button 281 may be disposed to face the discharge grill 18.

The second body 2 may include the plate 24 provided with a flat surface.

The second body 2 may include an upper plate 23 disposed between the lower cover 22 and the plate 24.

The indicator 26 may be disposed on the upper surface of the second body 2. The indicator 26 may face the upper side. The indicator 26 may be formed on the upper plate 23. The indicator 26 may be formed to protrude from the upper plate 23 toward the plate 24. The indicator 26 may be inserted into the slot 241 formed in the plate 24.

A board 264 may be disposed below the indicator 26. The board 264 can operate the indicator 26. The board 264 may be connected to a control unit.

The indicator 26 may be located on the upper side of a button module 25. The indicator 26 and the button module 25 may be arranged side by side in the vertical direction. The indicator 26 can visually indicate the operation of the button module 25.

The button module 25 may be disposed on the lower surface of the second body 2. The button module 25 may be disposed to face downward.

The button module 25 may be disposed on the lower side of the board 264. The button module 25 may be disposed on the lower cover 22. The button module 25 may form the guide wall 221. The button module 25 may be disposed to correspond to the slope of the guide wall 221. For example, the guide wall 221 is inclined upward toward the outer side of the first body 1, and the button module 25 may also be disposed at an angle corresponding to the inclined angle of the guide wall 221.

Accordingly, the discharged airflow flowing along the guide wall 221 reaches the button module 25, and thus the user can adjust the operating state of the air cleaner 3 while feeling the intensity of the discharged air with their hands.

The button module 25 may be connected to the board 264. The button module 25 may be connected to the control unit. The button module 25 may be connected to the indicator 26. The button module 25 can be used to change the operating state of the air cleaner 3. For example, when the user presses the button module 25, operation of the air cleaner 3 can start or stop.

The button module 25 may be disposed adjacent to the outer edge of the second body 2. The button module 25 may be disposed closer to the outer edge of the second body 2 than the column 21. The button module 25 may be located outside the perimeter wall of the first body 1. For example, the button module 25 may be disposed adjacent to the outer edge of the lower cover 22 such that the user can easily reach the button module 25.

Accordingly, the user can easily access the button module that is not visible.

The button module 25 may be disposed under the indicator 26. The board 264 may be disposed between the button module 25 and the indicator 26. The button module 25, the board 264, and the indicator 26 may be arranged side by side in the vertical direction. For example, the board 264 may be disposed below the indicator 26, and the button module 25 may be disposed below the board 264.

Accordingly, the user can easily ascertain the location of the button module 25, which is not visible, using the indicator 26 disposed on the upper surface.

Therefore, a separate member for connecting the button module 25 and the board 264 is not required to operate the indicator 26, and thus the number of parts can be reduced and the structure can be simplified.

The charging pad 271 may be formed on the upper plate 23. The charging pad 271 may be formed to protrude from the upper plate 23 toward the plate 24. The charging pad 271 may be inserted into the pad hole 242 formed in the plate 24. A charging coil 272 may be disposed below the charging pad 271. The charging coil 272 may be disposed between the lower cover 22 and the upper plate 23. A charging board 273 may be adjacent to the charging coil 272 and may be disposed on the lower side of the upper plate 23.

A water catchment channel may be formed on the upper plate 23. The water catchment channel may be formed on the lower side of the plate 24. The water catchment channel may be formed between the plate 24 and the upper plate 23. The water catchment channel may be formed by recessing from the upper plate 23.

The water catchment channel may include a main catchment canal 231. The main catchment channel 231 may be disposed adjacent to the center of the upper plate 23.

The water catchment channel may include a slot catchment channel 232. The slot catchment channel 232 may be formed along the circumference of the indicator 26. The slot catchment channel 232 may be located below a slot 241 formed in the plate 24. The slot catchment channel 232 may be located below the edge of the slot 241.

Accordingly, liquid that penetrates into the gap between the slot of the plate and the indicator can be collected in the slot catchment channel.

The water catchment channel may include a pad catchment channel 233. The pad catchment channel 233 may be formed along the circumference of the charging pad 271. The pad catchment channel 233 may be located below the pad hole 242 formed in the plate 24. The pad catchment channel 233 may be located below the edge of the pad hole 242. The pad catchment channel 233 may be formed along a portion of the circumference of the charging pad 271.

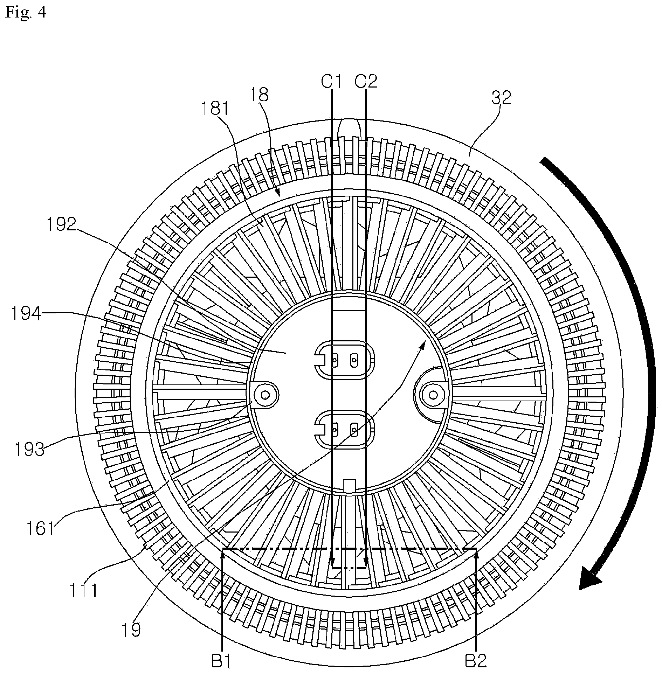

The first body 1 will be described with reference to FIG. 4.

The holder 19 may be disposed on the upper side of the first body 1. The holder 19 may face the upper side. The second body 2 may be coupled to the holder 19. The holder 19 may be formed by being depressed to a predetermined depth. The holder 19 may be disposed at a position corresponding to the center of the first body 1. For example, the holder 19 may be disposed at a position corresponding to the center of the first body 1, extend toward the outer side of the first body 1, and be depressed to a predetermined depth.

The holder 19 may be formed in a cylindrical shape. The cross section of the holder 19 may have a shape corresponding to the cross section of the column 21. For example, the holder 19 may be formed in a cylindrical shape having a circular cross section.

The holder 19 may include the holder base 192 facing the upper side. The holder base 192 may be formed in a shape corresponding to the cross-sectional shape of the first body 1. The holder base 192 may be formed in the shape of the cross section of the holder 192. For example, the holder 19 may be cylindrical and the holder base 192 may be circular.

The holder 19 may include the guide column 193. The guide column 193 can guide the insertion direction of the column 19 of the second body 2. The guide column 193 may be formed on the inner wall of the holder 19. There may be a plurality of guide columns 193. For example, the guide column 193 may be formed on the inner wall of the holder 19, and the two guide columns 193 may be spaced apart from each other and disposed at opposing positions.

The holder edge 194 may be located at the upper end of holder 19. For example, holder edge 194 may form the upper edge of the holder 19.

The discharge port 17 may be open upward. The discharge port 17 may have a circular shape.

The discharge port 17 may be formed in the discharge grill 18. The discharge grill 18 may form the upper part of the first body 1. The discharge grill 18 may be disposed on the upper side of the first body 1. The discharge grill 18 may have a circular shape. The discharge grill 18 may be formed around the holder 19. The discharge grill 18 may have the holder 19 disposed at the center and may be formed in an annular shape. The discharge grill 18 may be connected to the holder edge 194 and the housing edge 161. For example, the discharge grill 18 has the holder 19 disposed at the center, extends from the holder edge 194 of the holder 19 to the outside of the first body 1, and is connected to the housing edge 161. In this case, the discharge grill 18 may be annular.

The discharge grill 18 may include the plurality of vanes 181. The discharge grill 18 may be composed of the plurality of vanes 181. The plurality of vanes 181 may be disposed side by side at the discharge port 17. The vanes 181 may be disposed at the end of the discharge passage 153. The vanes 181 may be disposed radially. For example, the discharge grill 18 may have an annular shape with the holder 19 disposed at the center, and the plurality of vanes 181 may be disposed radially based on the virtual center of the discharge grill 18.

The width of the discharge grill 18 may be less than the width of the base 32. The width of the discharge grill 18 may be less than the width of the first body 1. For example, the first body 1 has a shape with a narrow upper part and a wide lower part, and the discharge grill 18 may be disposed at the upper part of the first body 1 and located at a height with the narrowest width in the first body 1.

The plurality of vanes 181 is disposed at the discharge port 17.

The plurality of vanes 181 may be disposed in the longitudinal direction, that is, parallel to the height direction of the first body 1.

The plurality of vanes 181 may be inclined such that the air discharged from the discharge port 17 is discharged obliquely upward. The plurality of vanes 181 may be inclined in the transverse direction, that is, in the circumferential direction of the first body 1, based on the height direction of the first body 1. The plurality of vanes 181 may be inclined in the circumferential direction of the discharge port 17. The circumferential direction may be toward one side or the other side along the outer edge of the discharge port. For example, the circumferential direction of the annular discharge port may be circumferential. For example, the plurality of vanes 181 may be radially disposed at the annular discharge port 17 and inclined in the circumferential direction.

The plurality of vanes 181 may be inclined in the rotation direction of the blowing fan 12. For example, the blowing fan 12 can rotate clockwise, and the plurality of vanes 181 may be radially disposed at the annular discharge port 17 and inclined clockwise.

Each of the plurality of vanes 181 may have a positive pressure surface 182 facing the direction from which air flows, and a negative pressure surface 183 opposite to the positive pressure surface 182. Each of the plurality of vanes 181 may be inclined such that the positive pressure surface 182 faces downward in the rotation direction of the blowing fan 12 and the negative pressure surface 183 faces upward in the direction opposite to the rotation direction of the blowing fan 12.

The discharge port 17 may face the upper side. The discharge port 17 may be formed to be slanted laterally toward the upper side. The discharge port 17 may be formed obliquely in the radial direction toward the upper side. For example, the annular discharge grill 18 includes the plurality of vanes 181 disposed radially, and the vanes 181 may be inclined clockwise along the circumference of the discharge port 17.

The air discharged from the discharge port 17 may form an airflow directed upward. The air discharged from the discharge port 17 may face upward and be discharged obliquely in the lateral direction. For example, the plurality of vanes 181 inclined clockwise may be radially disposed at the annular discharge port 17, and the air discharged from the discharge port 17 may be discharged through the vanes 181 while spirally rotating clockwise toward the upper side.

Accordingly, it is possible to minimize loss of the discharged air occurring when the discharged air hits the guide wall 221 of the second body 2.

Therefore, the efficiency of the air cleaner 3 can be improved.

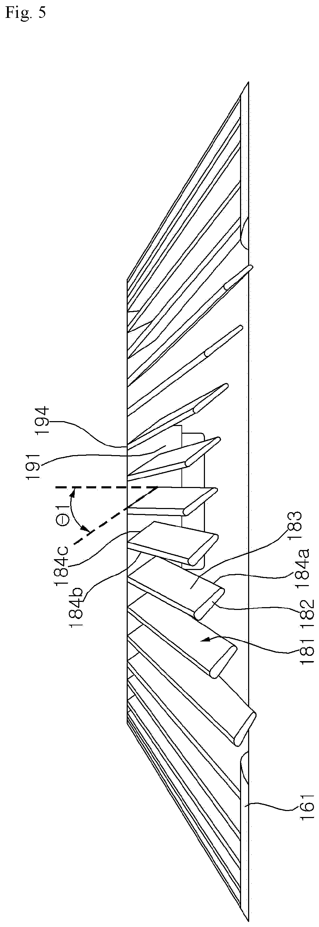

The discharge grill 18 will be described with reference to FIG. 5.

FIG. 5 is an elevation cross-sectional view taken along line B1-B2 of the discharge grill 18 in FIG. 4.

The discharge grill 18 may extend in the height direction of the first body 1. The discharge grill 18 may be formed obliquely in the height direction of the first body 1. The discharge grill 18 may be inclined in the height direction of the first body 1. For example, the discharge grill 18 may be formed to be inclined upward toward the center of the first body 1. For example, the discharge grill 18 may be formed to be inclined downward toward the outer side of the first body 1. For example, the discharge grill 18 may have a conical shape with the upper end thereof cut off.

The holder 19 may be raised. The holder edge 194 of the holder 19 may be raised. The height of the holder edge 194 may be higher than the height of the housing edge 161 of the first body 1. The discharge grill 18 may be connected to the holder edge 194 and the housing edge 161. For example, the discharge grill 18 may be connected from the holder edge 194 to the lower housing edge 161 and may be formed to be inclined.

The vanes 181 may be disposed obliquely in the longitudinal direction. One end of each vane 181 may be raised higher than the other end. The inner end of each vane 181 connected to the holder edge 194 may be higher than the outer end connected to the housing edge 161. The vanes 181 may be inclined upward toward the outer side of the first body. The vanes may be disposed to be inclined at a predetermined angle θ3a in the radial direction of the first body 1. For example, the plurality of vanes 181 may be inclined at the predetermined angle θ3a in the radial direction of the first body 1 and may be disposed to be radially spaced apart.

The vanes 181 may be disposed obliquely in the radial direction. The vanes 181 may be inclined in the radial direction. The vanes 181 may be obliquely connected to the holder wall 191. The vanes 181 may be disposed to be inclined at a predetermined angle θ1 in the lateral direction with respect to the height direction of the holder wall 191. For example, the vanes 181 may be connected to the holder wall 191 and the housing edge 161 and may be inclined clockwise relative to the holder wall 191. Here, the air discharged from the discharge port 17 may be ejected upward in the clockwise direction.

The vanes 181 inclined in the circumferential direction may have the positive pressure surfaces 182 in the direction from which air flows. The positive pressure surfaces 182 may face the lateral direction. The positive pressure surfaces 182 may face the downward direction. For example, the airflow flows from the lower part of the first body 1 to the upper part, and the positive pressure surfaces 182 of the vanes 181 inclined clockwise may face downward in the clockwise direction.

The vanes 181 inclined in the circumferential direction may include the negative pressure surfaces 183 that are opposite surfaces of the positive pressure surfaces 182. The negative pressure surfaces 183 may be surfaces in a direction opposite to the positive pressure surfaces 182. The negative pressure surfaces 183 may face the upper side. The negative pressure surfaces 183 may face the lateral direction. For example, since the airflow flows from the lower part of the first body 1 to the upper part, the negative pressure surfaces of the vanes 181 inclined clockwise may face upward in the counterclockwise direction.

When the vanes 181 are disposed to be inclined in the lateral direction with respect to the height direction of the holder 19, a predetermined angle θ1 inclined with respect to the holder 19 may be based on the negative pressure surface 183.

The discharge port 17 may face the upper side of the first body 1.

Each vane 181 may include a front end 184a. The front end 184a is the lower end of the vane 181 on the upstream side in the air flow direction. The front end 184a may be disposed on the lower side of the vane 181. For example, the airflow is formed from the lower part of the first body 1 to the upper part, and the front end 184a may face the lower side of the first body 1.

The front end 184a may be inclined in the lateral direction. The front end 184a may be inclined in the circumferential direction of the discharge port 17. The front end 184a may face the circumferential direction. For example, the front end 184a of the vane 181 inclined clockwise may face the lower side counterclockwise.

Each vane 181 may include a rear end 184b. The rear end 184b is the upper end of the vane 184 on the downstream side in the air flow direction. The rear end 184b may be disposed on the upper side of the vane 181. For example, the airflow is formed from the lower part of the first body 1 to the upper part, and the rear end 184b may face the upper side of the first body 1.

The rear end 184b may be inclined in the lateral direction. The rear end 184b may be inclined in the circumferential direction. The rear end 184b may face the circumferential direction. For example, the rear end 184b of the vane 181 inclined clockwise may face the upper side clockwise.

The front end 184a and the rear end 184b can connect the negative pressure surface 183 and the positive pressure surface 182.

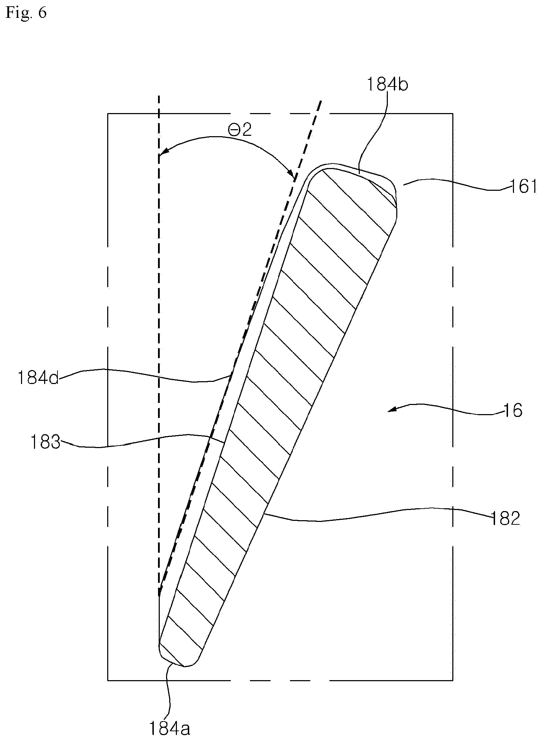

The vanes 181 will be described with reference to FIG. 6.

FIG. 6 is a cross-sectional view of one of the vanes 181 taken along line C1-C2 in FIG. 4.

The vane 181 may be connected to the upper housing 16. The vane 181 may be inclined at a predetermined angle θ2 with respect to the height direction of the first body 1. The vane 181 may be inclined at the predetermined angle θ2 with respect to the height direction of the upper housing 16. The predetermined angle θ2 may be based on the negative pressure surface 183 of the vane 181. For example, the vane 181 may be inclined such that the negative pressure surface 183 forms a predetermined angle θ2 with respect to the height direction of the upper housing 16.

One end of the vane 181 adjacent to the column 21 is inclined at a first angle θ1 with respect to the vertical direction and is in contact with the first body 1, and the other end opposite to the one end is inclined at a second angle θ2 with respect to the vertical direction and is in contact with the first body 1.

One end of the vane 181 may be connected to the holder edge 194, and the other end may be connected to the housing edge 161. The vane 181 contacts the holder wall 191 at the angle θ1 with respect to the height direction of the first body 1 and contacts the upper housing 16 at the angle θ2 with respect to the height direction of the first body 1. For example, the vane 181 may be connected to the holder edge 194 at the angle θ1 with respect to the height direction of the first body 1 and connected to the housing edge 161 at the second angle θ2.

The first angle θ1 and the second angle θ2 may be different from each other. Each of the plurality of vanes 181 may be twisted. The positive pressure surface 182 and the negative pressure surface 183 of the vane 181 may be curved surfaces.

The first angle θ1 and the second angle θ2 may correspond to each other. Each of the plurality of vanes 181 may be straighten. The positive pressure surface 182 and negative pressure surface 183 of the vane 181 may be flat.

The thickness of each of the plurality of vanes 181 may increase toward one side. The thickness may be the gap between the positive pressure surface 182 and the negative pressure surface 183. For example, the thickness of each of the plurality of vanes 181 may increase from the front end 184a to the rear end 184b.

The thickness of the front end 184a and the thickness of the rear end 184b may be different from each other. For example, the width of the vane 181 may increase from the front end 184a to the rear end 184b.

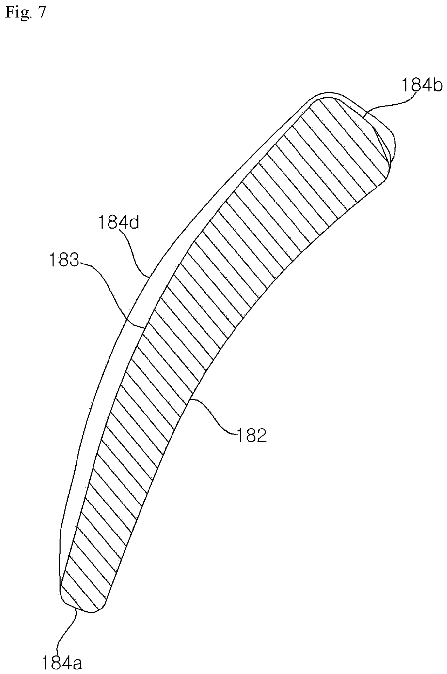

The vane 181 will be described with reference to FIG. 7.

The vane 181 may be bent. The vane 181 may be bent in the longitudinal direction. The vane 181 may be bent such that the positive pressure surface 182 is concave upward. The vane 181 may be bent such that the negative pressure surface 183 is convex upward. The vane 181 may be bent such that the center thereof is spaced to one side. The vane 181 may be bent such that the central axis in the longitudinal direction is spaced to one side.

Accordingly, air flowing upward can be discharged upward while rotating in the circumferential direction by the vane.

Accordingly, loss due to collision of the discharged air with the second body can be improved.

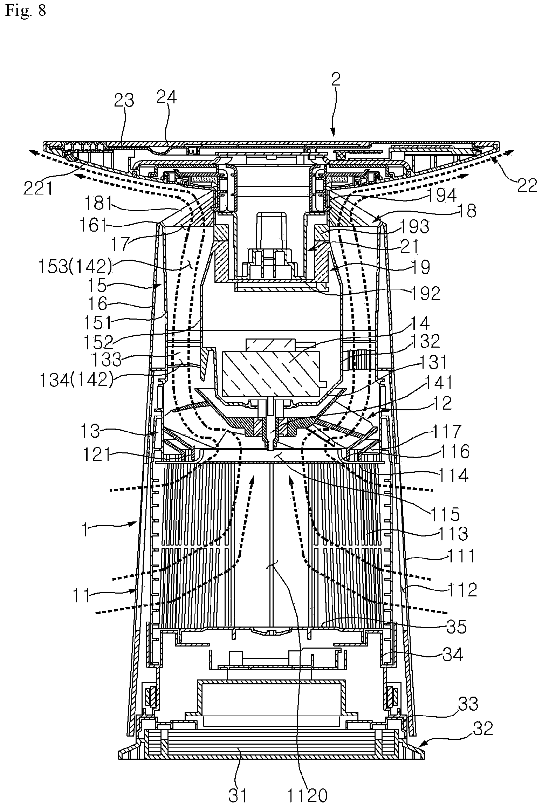

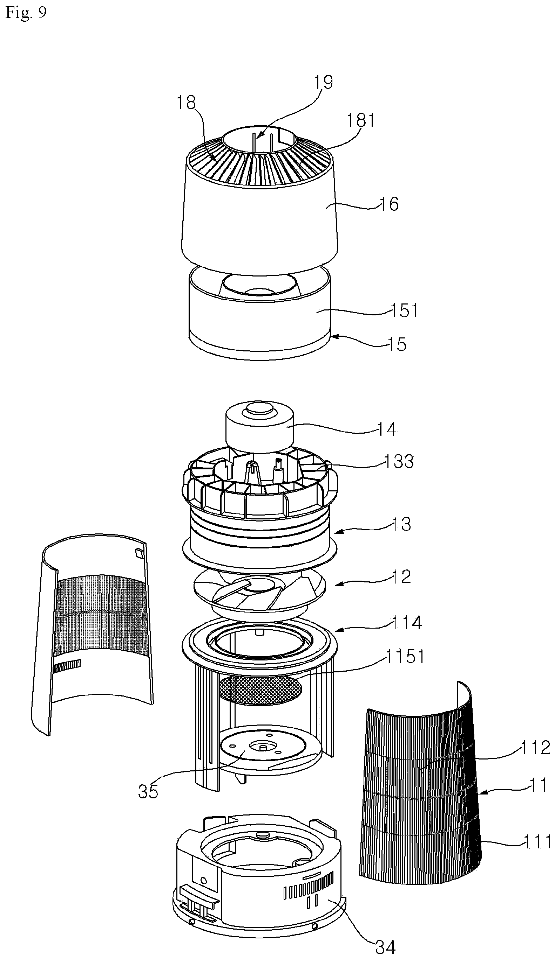

The air cleaner 3 will be described with reference to FIG. 8 and FIG. 9.

The air cleaner 3 may include the base 32 supporting the first body 1.

The air cleaner 3 may include a weight disposed at the bottom. The weight may be disposed inside the first body 1. The weight may be disposed on the lower side of the intake port 112. The weight may be disposed between the base 32 and the intake port 112. The weight may be disposed inside the base 32. For example, the weight may be coupled to the base 32 and disposed at the bottom of the air cleaner 3.

The weight may be a weight plate 31. A plurality of weight plates 31 may be stacked.

The first body 1 may include the lower housing 11.

The air cleaner 3 may include a bottom housing 34 disposed inside the first body 1 and a bottom cover 35 that covers the bottom housing 34. Electrical parts may be disposed inside the bottom housing 34. For example, the electrical parts may be disposed inside the bottom housing 34, and the bottom housing 34 may be covered by the bottom cover 35.

The air cleaner 3 may include the filter 113. The filter 113 may be disposed inside the first body 1. The filter 113 may be disposed inside the lower housing 11. The filter 113 may face the intake port 112 formed in the first body 1. The air entering the intake port 112 may pass through the filter 113 and flow into the first body 1.

The filter 113 may be formed in a shape corresponding to the interior of the first body 1. For example, the filter 113 may be formed in a cylindrical shape corresponding to the cylindrical first body 1.

The filter 113 may face the inner wall of the first body 1. The filter 113 may face the inner wall of the lower housing 11.

An intake passage 1120 may be formed inside the filter 113. The intake passage 1120 may communicate with the intake port 112. The air entering the intake port 112 may pass through the filter 113 and flow into the intake passage 1120. The intake passage 1120 may be formed inside the first body 1. The intake passage 1120 may be formed inside the lower housing 16. The air that has entered the intake passage 1120 through the intake port 112 may move to the upper part of the first body 1 by the blowing fan 12.

The air cleaner 3 may include an orifice 114 disposed inside the first body 1. The orifice 114 may face the blowing fan 12. The orifice 114 may face the intake passage 1120. One side of the orifice 114 may face the blowing fan 12, and the other side may face the intake passage 1120. For example, one side of the orifice 114 may face the blowing fan 12, and the other side opposite the one side may face the intake passage 1120.

The orifice 114 may include an inlet 115. The air flowing into the intake passage 1120 may pass through the inlet 115 of the orifice 114 and moves toward the blowing fan 12. The inlet 115 may be formed in a circular shape.

The orifice 114 may include an inlet guide 116 of which edge forms the inlet 115, and the edge is bent upward. The inlet guide 116 may be bent toward the blowing fan 12. Air introduced into the intake passage 1120 can move to the blowing fan 12 through the inlet guide 116 without loss. For example, the inlet guide 116 may be formed by bending the inner edge of the orifice 114 that forms the inlet 115 upward.

The blowing fan 12 may face the inlet 115. The blowing fan 12 may be disposed above the inlet 115. The blowing fan 12 may be disposed between a vertical passage 142 and the intake passage 1120. The blowing fan 12 may divide the vertical passage 142 and the intake passage 1120. The blowing fan 12 may divide a blowing passage 134 and the intake passage 1120.

The blowing fan 12 can move the air introduced into the intake passage 1120 through the intake port 112 to the discharge port 17. The vertical passage 142 may be disposed between the intake passage 1120 and the discharge port 17. The vertical passage 142 may include the blowing passage 134 and the discharge passage 153.

The vertical passage 142 may be formed by a cover and a housing.

The cover may include an inner cover 152 and a motor cover 132. The cover may further include an inclined cover 131. The cover may extend downward from the holder 19.

A blowing motor 14 may be disposed inside the cover. The blowing fan 12 may be disposed on the lower side of the cover. The diameter of the outer circumference of the cover may increase toward the bottom. The diameter of the outer circumference of the cover may decrease toward the top. The width of the cover may decrease toward the top. The cover may be a curved surface whose curvature increases toward the top. The cover may be formed to be convex in the radial direction. The distance between the cover and the outer wall of the first body 1 may increase toward the top.

Accordingly, the airflow moving to the discharge port can be guided to the second body by moving along the cover according to the Coanda effect.

The housing may include the upper housing 16.

The housing may be disposed between the outer wall of the first body 1 and the cover. The width of the housing may increase toward the top. The distance between the housing and the cover may increase toward the top.

The blowing motor 14 can rotate the blowing fan 12. A shaft 141 can connect the blowing motor 14 and the blowing fan 12. For example, the blowing fan 12 is connected to the blowing motor 14 located on the upper side thereof by the shaft 141, and the airflow can be formed from the lower part of the first body 1 to the upper part by the rotation of the blowing fan 12.

The blowing motor 14 can rotate the blowing fan 12 in the circumferential direction. For example, the blowing motor 14 rotates the blowing fan 12 clockwise, and the air flowing from the intake passage 1120 through the inlet 115 can move to the blowing passage 134 by the blowing fan 12.

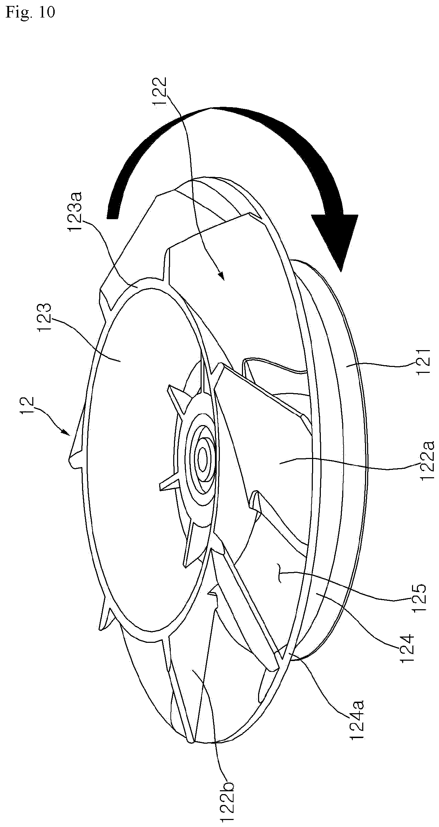

The blowing fan 12 will be described with reference to FIG. 10.

The blowing fan 12 may be disposed inside the first body 1.

The blowing fan 12 can rotate in the circumferential direction of the first body 1. The blowing fan 12 can rotate in the circumferential direction. For example, the blowing fan 12 can rotate clockwise.

The air cleaner 3 may include the blowing housing 13 disposed inside the first body 1. The blowing fan 12 may be disposed inside the blowing housing 13. The blowing motor 14 may be disposed inside the blowing housing 13. For example, the blowing fan 12 may be disposed at the bottom of the blowing housing 13, and the blowing motor 14 may be disposed at the top of the blowing housing 13.

The blowing fan 12 may include a hub 123 at the center thereof, and the rotation axis of the blowing motor 14 is coupled to the hub 123. The hub 123 may be formed to be concave downward. For example, the hub 123 may be concave downward, and a hub edge 123a may be circular.

The lower part of the motor cover 132 is inserted into the upper part of the hub 123 such that at least a part of the blowing motor 14 is disposed inside the hub 123.

The shaft 141 of the blowing motor 14 disposed on the upper side of the hub 123 is coupled to the center of the hub 123. The hub 123 is disposed to be spaced apart from the upper side of a shroud 124. A plurality of blades 122 is coupled to the lower surface of the hub 123.

The blowing fan 12 may include the shroud 124 that is disposed to be spaced apart from the hub 123 and has an air blowing port 125 through which air is sucked and which is formed at the center of the shroud 124. The shroud 124 may be formed in a shape corresponding to the shape of the hub 123. For example, the hub 123 has the circular hub edge 123a and is concave downward, and the shroud 124 also has a circular shroud edge 124a and is concave downward. The shroud 124 may be larger than the hub 123.

The blowing fan 12 may include the plurality of blades 122 disposed between the hub 123 and the shroud 124. The blades 122 can connect the hub 123 and the shroud 124. The upper ends of the blades 122 are coupled to the lower surface of the hub 123 and the lower ends thereof are coupled to the upper surface of the shroud 124. The plurality of blades 122 is disposed to be spaced apart in the circumferential direction.

The blades 122 may have a flat surface. The blades 122 may be disposed to be inclined between the hub 123 and the shroud 124. The blades 122 may be inclined in a direction opposite to the rotation direction of the blowing fan 12. For example, the blowing fan 12 rotates clockwise, and the blades 122 may be disposed to be inclined counterclockwise with respect to the height direction of the blowing fan 12 between the hub 123 and the shroud 124. Here, negative pressure surfaces 122a of the blades 122 may face upward in the clockwise direction.

The blowing fan 12 may include an intake guide 121 extending downward from the shroud 124. The intake guide 121 may face the inlet 115. Air blowing from the inlet 115 may pass through the intake guide 121 and move to the air blowing port 125 formed between the hub 123 and the shroud 124. The intake guide 121 can prevent loss of air flowing from the inlet 115 toward the air blowing port 125.

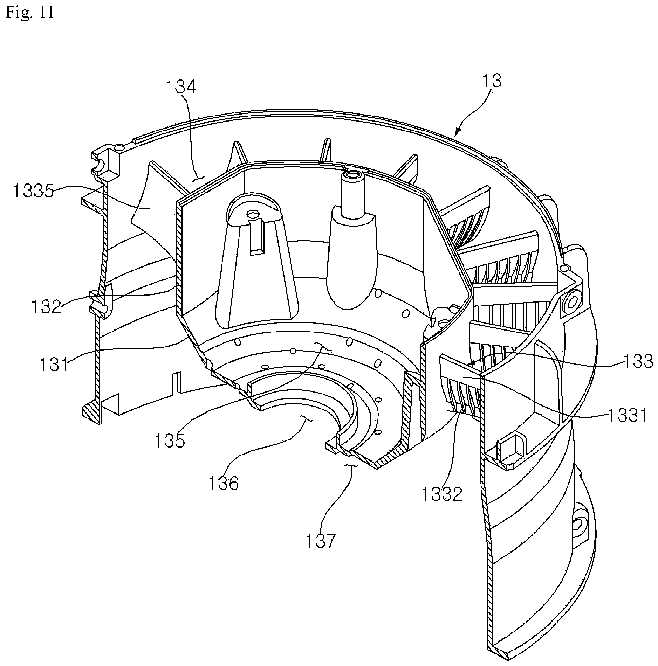

The blowing housing 13 will be described with reference to FIG. 11.

The blowing housing 13 may include the motor cover 132 on which the blowing motor 14 is disposed. The motor cover 132 may delimit a motor installation part 135 where the blowing motor 14 is disposed. The blowing fan 12 may be disposed outside the motor cover 132, and the blowing motor 14 may be disposed inside the motor cover 132.

A through-hole 136 may be formed in the motor cover 132 to allow the shaft 141 connecting the blowing motor 14 and the blowing fan 12 to pass through. The blowing motor 14 disposed inside the motor cover 132 and the blowing fan 12 disposed outside the motor cover 132 may be connected by the shaft 141 passing through the through-hole 136.

The blowing housing 13 may include the inclined cover 131 formed at the lower part of the motor cover 132. The inclined cover 131 may be disposed to be inclined upward toward the outside of the blowing housing 13. The inclined cover 131 may be disposed to be inclined downward toward the inside of the blowing housing 13. The slope of the inclined cover 131 may correspond to the slope of the blowing fan 12. For example, the slope of the inclined cover 131 may correspond to the slope direction of the shroud 124 of the blowing fan 12.

The blowing housing 13 may include the blowing passage 134 formed by the motor cover 132 and the outer wall of the blowing housing 13. Air moving from the lower side to the upper side through the blowing fan 12 may pass through the blowing passage 134. The blowing passage 134 may be annular. For example, the blowing passage 134 may be an annular passage formed between the outer wall of the blowing housing 13 and the motor cover 132 disposed inside the blowing housing 13.

The blowing housing 13 may include a guide vane 133 disposed between the motor cover 132 and the outer wall of the blowing housing 13. A plurality of guide vanes 133 may be disposed radially along the circumference of the motor cover 132 and spaced apart from each other. The guide vanes 133 can guide the air blowing in a spiral form from the blowing fan 12 on the lower side such that the air flows in a straight line toward the upper side.

The guide vanes 133 may be disposed to be inclined with respect to the height direction of the blowing housing 13. The guide vanes 133 may be disposed to be inclined in a direction opposite to the inclination direction of the blades 122 of the blowing fan 12. For example, the blades 122 of the blowing fan 12 may be disposed to be inclined upward in the counterclockwise direction, and the guide vanes 133 may be disposed to be inclined upward in the clockwise direction.

The guide vanes 133 may be disposed to form the blowing passage 134 in a direction corresponding to the direction of air blowing from the blowing fan 12. For example, the air blowing from the blowing fan 12 is blown upward in the clockwise direction, and the guide vanes 133 are disposed to be inclined upward in the clockwise direction, and thus the blowing passage 134 can face upward in the clockwise direction.

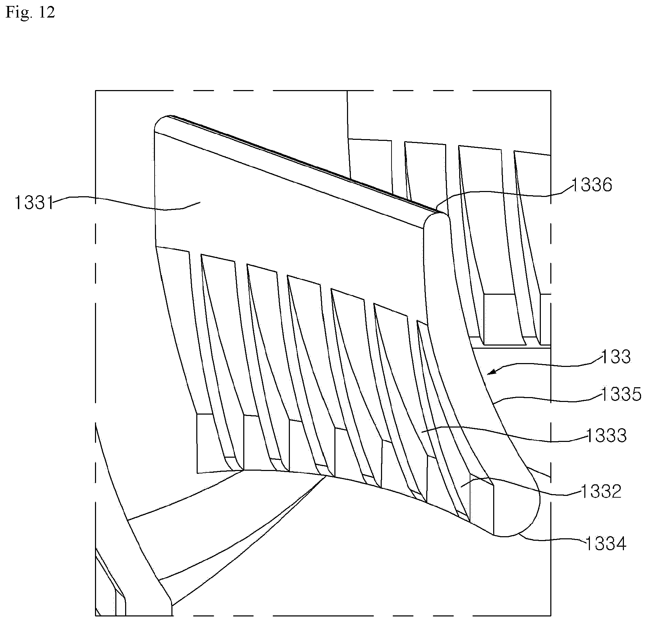

The guide vane 133 will be described with reference to FIG. 12.

The guide vane 133 may have a positive pressure surface 1331 which is a surface facing the direction from which air blows, and a negative pressure surface 1335 which is a surface in a direction opposite to the positive pressure surface 1331. The guide vane 133 may be inclined, the positive pressure surface 1331 may face the lower side, and the negative pressure surface 1335 may face the upper side. For example, the guide vane 133 is inclined toward the upper side in the clockwise direction, the positive pressure surface 1331 faces the lower side in the clockwise direction, and the negative pressure surface 1335 may face the upper side in the counterclockwise direction.

The guide vane 133 may have the shape of a plate. The guide vane 133 may be curved. The positive pressure surface 1331 of the guide vane 133 may be convex, and the negative pressure surface 1335 thereof may be concave. The guide vane 133 may be bent such that the rear end 1336 faces the upper side. For example, the guide vane 133 may be bent such that the front end 1334 faces the lower side in the counterclockwise direction and the rear end 1336 faces the upper side. Here, the positive pressure surface 1331 may be convex and the negative pressure surface 1335 may be concave.

A plurality of ribs 1332 may be formed on at least a portion of the positive pressure surface 1331 of the guide vane 133. For example, the plurality of ribs 1332 may extend from the lower side to the upper side of the positive pressure surface 1331 and may be formed on a portion of the positive pressure surface 1331, and the remaining portion may be a flat surface.

A guide groove 1333 may be formed between the plurality of ribs 1332 of the positive pressure surface 1331. The ribs 1332 may be formed in a direction corresponding to the air flow direction. For example, air flows from the lower side to the upper side, and the ribs 1332 may be formed in the vertical direction. Here, the groove 1333 may be formed between the ribs 1332 in the vertical direction.

The guide vane 133 has the front end 1334 and the rear end 1336. The front end 1334 may face the upstream side of the air flow direction, and the rear end 1336 may face the downstream side of the air flow direction. For example, the air moves from the lower side to the upper side, the front end 1334 of the guide vane 133 may correspond to the lower side on the upstream side in the air flow direction, and the rear end 1336 may correspond to the upper end on the downstream side in the air flow direction.

The rear end 1336 may be rounded.

The front end 1334 may be rounded. For example, the front end 1334 may be formed to bend roundly from the positive pressure surface 1331 to the negative pressure surface 1335.

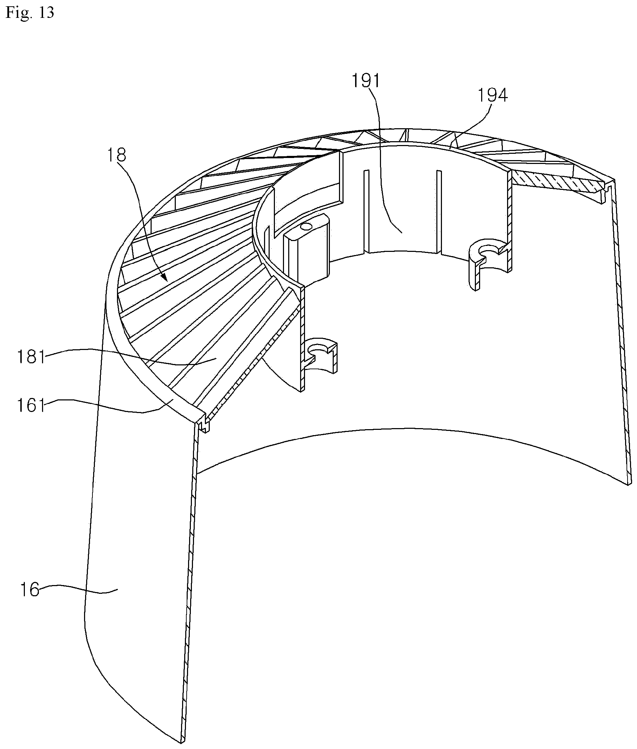

The upper housing 16 will be described with reference to FIG. 13.

The upper housing 16 may extend long in the height direction of the first body 1. For example, the upper housing 16 may have a cylindrical shape extending long in the height direction of the first body 1.

The discharge port 17 may be formed on the upper side of the upper housing 16. The discharge grill 18 may be disposed on the discharge port 17.

The upper housing 16 may include at least a portion of the holder 19. The second body 2 may be coupled to the holder 19. The holder 19 may be disposed inside the upper housing 16, and the holder 19 and the upper housing 16 may be connected by the discharge grill 18. For example, the holder 19 is disposed inside the upper housing 16, the holder 19 and the upper housing 16 are connected by the discharge grill 18, and the vanes 181 of the discharge grill 18 may be disposed radially between the holder wall 191 and the upper housing 16.

The holder 19 may be placed higher than the upper housing 16. The height of the holder edge 194 may be higher than the height of the housing edge 161. The discharge grill 18 can connect the holder edge 194 and the housing edge 161. The discharge grill 18 may be formed to be inclined. The inner side of the discharge grill 18 may be raised such that the discharge grill 18 is inclined downward toward the outside. For example, the discharge grill 18 may be connected from the holder edge 194 to the housing edge 161 and may be inclined downward from the holder edge 194 toward the housing edge 161.

The vanes 181 may be disposed to be inclined. The vanes 181 may be connected to the holder edge 194 and the housing edge 194. For example, the vanes 181 may be connected from the holder edge 194 to the housing edge 161 and may be inclined downward from the holder edge 194 toward the housing edge 161.

The air cleaner 3 will be described with reference to FIG. 8 and FIG. 9.

The orifice 114 may include a flow guide 117 spaced apart from the lower side of the blowing fan 12. The flow guide 117 may be formed to be inclined. The flow guide 117 may be inclined in a direction corresponding to the inclination direction of the shroud 124 of the blowing fan 12. For example, the shroud 124 of the blowing fan 12 is inclined upward toward the outside of the blowing fan 12, and the flow guide 117 is inclined in a direction corresponding to the inclination direction of the shroud 124. The flow guide 117 may guide air leaking through the gap between the inlet guide 116 and the intake guide 121 upward.

The flow guide 117 can prevent loss of air flowing from the intake passage 1120 to the blowing passage 134. The flow guide 117 can prevent occurrence of vortices inside the first body 1.

The intake guide 121 of the blowing fan 12 may cover the inlet guide 116. The intake guide 121 may be formed to be larger than the inlet guide 116. For example, the inlet guide 116 may be cylindrical, and the intake guide 121 may be formed in a larger cylindrical shape than the inlet guide 161 to cover the side of the inlet guide 161.

The air cleaner 3 may include the inner body 15 that is disposed inside the upper housing 16 and forms the discharge passage 153. The inner body 15 may include the inner housing 151 forming the outer wall, and the inner cover 152 extending from the motor cover 132 in the height direction of the inner body 15. The inner housing 151 may be connected to the upper housing 16 at the housing edge 161. The inner cover 152 may be connected to the motor cover 132 and the holder wall 191. The inner housing 151 may be cylindrical. The inner cover 152 may have a shape corresponding to the inner housing 16. For example, the inner cover 152 may have a cylindrical shape smaller than the inner housing 151 to correspond to the cylindrical inner housing 151.

The discharge passage 153 may be formed by the inner housing 151 and the inner cover 152. The discharge passage 153 may extend in the vertical direction. The discharge passage 153 may connect the discharge port 17 and the blowing passage 134. Air introduced from the blowing passage 134 may be discharged to the discharge port 17 through the discharge passage 153.

The inner cover 152 may be formed as a curved surface. The inner cover 152 is cylindrical and may be narrowed in the air flow direction. The width between the inner housing 151 and the inner cover 152 may be widened in the air flow direction. The discharge passage 153 may be widened in the air flow direction. For example, air flows from the lower side to the upper side, the inner cover 152 has a cylindrical shape with an outer wall curved such that the width becomes narrower toward the top, and the discharge passage 153 formed between the inner cover 152 and the inner housing 151 may become wider toward the top. The flowing air can move upward along the inner cover 152 which is formed as a curved surface due to the Coanda effect.

The discharge port 17 may be located on the upper side of the inner body 15. The discharge port 17 may be disposed at the end of the discharge passage 153 inside the inner body 15. The discharge port 17 may be formed in the discharge grill 18. The discharge port 17 may be formed between the plurality of vanes 181 of the discharge grill 18.

The second body 2 may be disposed above the first body 1. The second body 2 may include the guide wall 221. The guide wall 221 may extend in the lateral direction. The guide wall 221 may be curved. The guide wall 221 may be formed as a curved surface. The guide wall 221 may have a shape convex downward. For example, the guide wall 221 may be a curved surface that bends upward toward the end of the second body 2.

The degree of bending of the guide wall 221 may increase toward the distal end. The guide wall 221 may have greater curvature toward the distal end.

Accordingly, the Coanda effect of the air flowing along the guide wall 221 can be increased.

The discharge port 17 may face the second body 2. The discharge port 17 may face the guide wall 221. Air discharged from the discharge port 17 may flow along the guide wall 221. The guide wall 221 can guide the air discharged from the discharge port 17. The guide wall 221 can control the direction of the discharged air.

The second body 2 may include the lower cover 22 provided with the guide wall 221. The lower cover 22 can form the appearance of a table.

The second body 2 is disposed on the upper side of the lower cover 22 and may include the plate 24 forming an upper surface. The upper surface may be a flat surface.

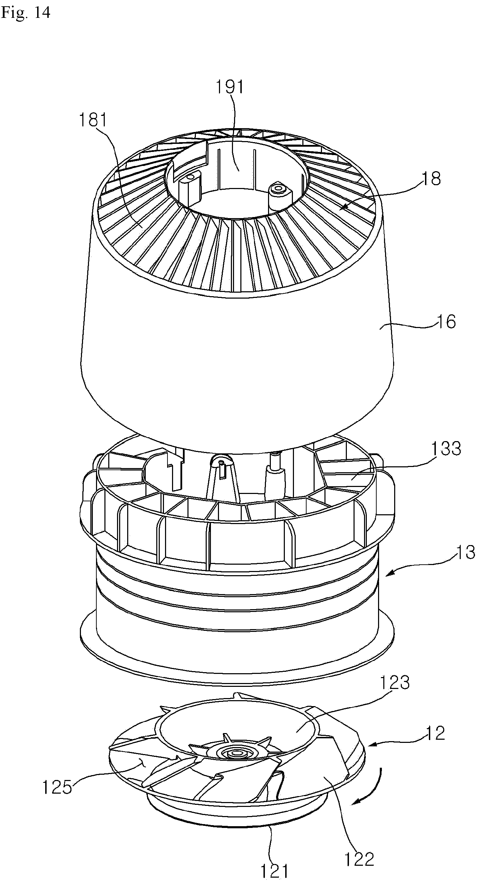

The air flow direction will be described with reference to FIG. 14.

The air entering the intake port of the first body 1 enters the intake guide 121 of the blowing fan 12. The air entering the intake guide 121 passes through the air blowing port 125 formed between the hub 123 and the shroud 124 and is blown in a predetermined direction by the blades 122. The predetermined direction may be the rotation direction of the blowing fan 12. The predetermined direction may be opposite to the direction in which the blades 122 are inclined. For example, the blowing fan 12 may rotate clockwise, and the air passing through the blowing fan 12 may be blown out while rotating clockwise. For example, the blades 122 of the blowing fan 12 may be inclined counterclockwise, and the air passing through the blowing fan 12 may be discharged while rotating clockwise.

The air passing through the blowing fan 12 enters the blowing passage 134 of the blowing housing 13. The air that enters the blowing passage 134 reaches the plurality of guide vanes 133 radially spaced apart from each other in the blowing passage 134. The guide vanes 133 may be inclined in the predetermined direction, spaced apart from each other, and disposed in a radial manner.

The guide vanes 133 may be bent such that the rear ends 1336 face the upper side and the front ends 1334 face the lower side in the counterclockwise direction. The air that blows while rotating spirally and enters the guide vanes 133 may be discharged upward.

Accordingly, the air can move upward.

For example, the air that enters the upper guide vanes 133 while rotating clockwise from the blowing fan 12 may have rotatability weakened by the guide vanes 133 and strengthened straightness toward the upper side.

The air moving straight upward through the guide vanes 133 can pass through the discharge grill 18 on the upper side. The vanes 181 of the discharge grill 18 may be inclined in a predetermined direction and may be disposed radially spaced apart from each other. For example, the vanes 18 of the discharge grill 17 are inclined clockwise such that the positive pressure surfaces 182 thereof face the lower side in the clockwise direction and the negative pressure surfaces 183 thereof face the upper side in the counterclockwise direction, and the discharged air is discharged upward while rotating clockwise.

Accordingly, since the discharged air is discharged upward while rotating spirally, loss due to friction with the second body 2 disposed at the upper side can be minimized.

Accordingly, the efficiency of the air cleaner 3 can be improved.

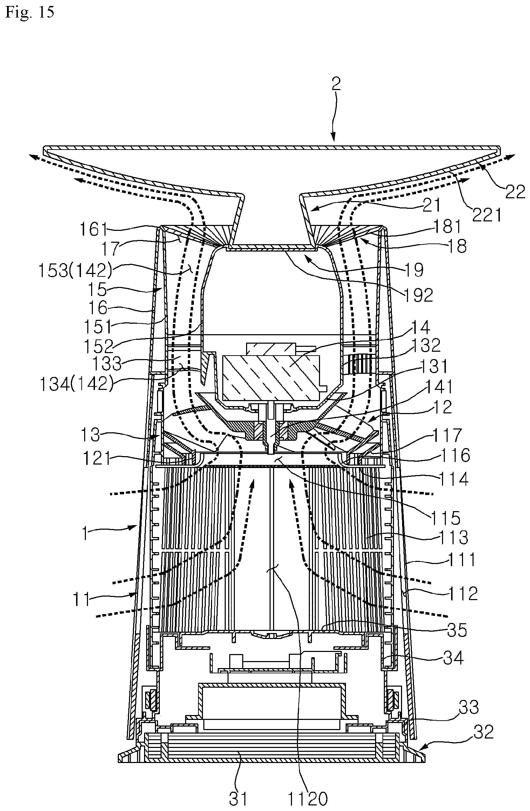

The air cleaner 3 will be described with reference to FIG. 15.

The discharge grill 18 may be disposed at the discharge port 17. The discharge grill 18 may be inclined downward as it moves away from the perimeter wall of the first body 1. The discharge grill 18 may be inclined upward as it moves away from the center of the first body 1. The discharge grill 18 may be connected to the upper end of the cover and the upper end of the perimeter wall of the first body 1. For example, the discharge grill 18 may be connected to the upper end of the inner cover 152 and the housing edge 161 of the first body 1, and the upper end of the inner cover 152 may be located lower than the housing edge 161 of the first body 1.

The discharge cover 18 may be provided with the plurality of vanes 181. The discharge cover 18 may be convex downward.

One end of each vane 181 in the longitudinal direction adjacent to the column 21 of the second body 2 may be located lower than the other end. The other end of each vane 181 in the longitudinal direction adjacent to the perimeter wall of the first body 1 may be positioned higher than one end. For example, the vanes 181 are connected to the upper end of the perimeter wall of the first body 1 and the upper end of the inner cover 152, and the upper end of the inner cover 152 may be located lower than the upper end of the perimeter wall of the first body 1. For example, the vanes 181 are connected to the housing edge 161 of the first body 1 and the upper end of the inner cover 152, and the upper end of the inner cover 152 may be located lower than the housing edge 161 of the first body 1.

The vanes 181 may be bent. The vanes 181 may be bent in the longitudinal direction. The vanes 181 may be bent to be convex downward.

The vanes 181 may be inclined upward with decreasing distance to the perimeter wall of the first body 1. The vanes 181 may be inclined downward with decreasing distance to the column 21 of the second body 2. For example, the vanes 181 may extend to incline downward with decreasing distance to the column 21 of the second body 2.

The extension direction of the vanes 181 may correspond to the extension direction of the guide wall 221. For example, the guide wall 221 and the vanes 181 may extend to incline upward with increasing distance to the center of the first body 1.

The upper end of the perimeter wall of the first body 1 and the guide wall 221 may be spaced apart from each other by a predetermined distance in the vertical direction. For example, the housing edge 161 and the guide wall 221 of the first body 1 may be spaced apart in the vertical direction.

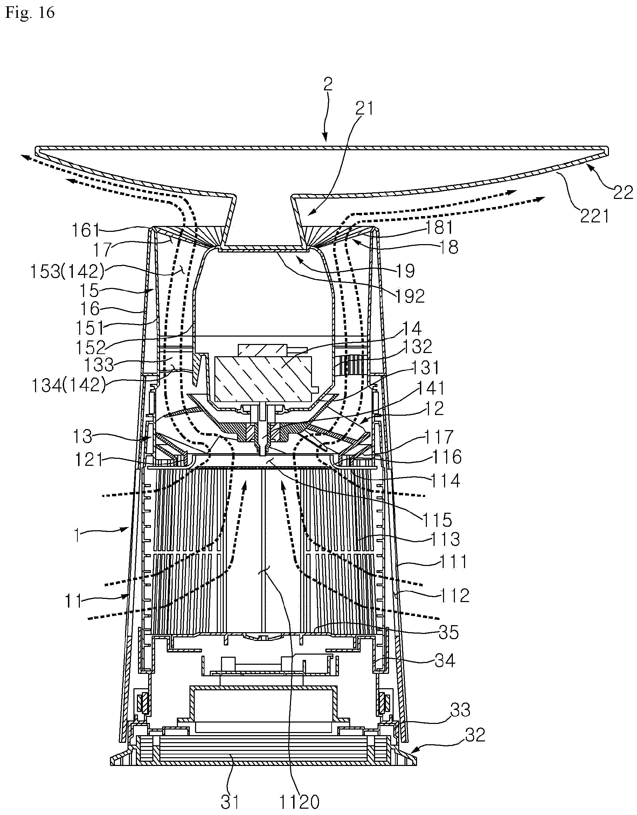

The air cleaner 3 will be described with reference to FIG. 16.

The second body 2 may extend long to one side. The second body 2 may cover the discharge port 17. The circumference of the upper surface of the second body 2 may be located outside the circumference of the discharge port 17. For example, the second body 2 may be located on the upper side of the discharge grill 18 to cover the discharge port 17 and may extend long to one side such that the circumference of the upper surface of the second body 2 is located outside the circumference of the discharge port 17.

Referring to FIG. 1 to FIG. 16 , an air cleaner according to an aspect of the present disclosure includes: a first body having an intake port formed in a perimeter wall and a discharge port open upward; a filter disposed inside the first body and facing the intake port; a blowing fan disposed between the intake port and the discharge port to form an air flow from the intake port to the discharge port inside the first body; a blowing motor disposed inside the first body and rotating the blowing fan; and a second body disposed above the first body, wherein the first body includes a plurality of vanes disposed at the discharge port and guiding a flow direction of air discharged from the discharge port, and one end of one of the vanes is inclined to be close to the other end of another vane disposed adjacently.

According to another aspect of the present disclosure, the discharge port may be an annular discharge port, and each of the plurality of vanes may be radially disposed at the annular discharge port and inclined in a rotation direction of the blowing fan.

According to another aspect of the present disclosure, each of the plurality of vanes may be disposed with an inner end inclined at a first angle with respect to the vertical direction and an outer end inclined at a second angle with respect to the vertical direction.

According to another aspect of the present disclosure, the first angle and the second angle may be different from each other, and each of the plurality of vanes may be twisted.

According to another aspect of the present disclosure, the first angle and the second angle correspond to each other, and each of the plurality of vanes may be straighten.

According to another aspect of the present disclosure, each of the plurality of vanes may be bent to be convex upward in a longitudinal direction.

According to another aspect of the present disclosure, the air cleaner may further include guide vanes disposed between the blowing fan and the discharge port inside the first body, wherein a plurality of guide vanes is disposed radially and inclined in a circumferential direction, and the direction in which the guide vanes are inclined may correspond to the rotation direction of the blowing fan.

According to another aspect of the present disclosure, each of the plurality of vanes may have a positive pressure surface facing a direction from which air flows and a negative pressure surface opposite to the positive pressure surface, the positive pressure surface may face downward in the rotation direction of the blowing fan, and the negative pressure surface may face upward in the direction opposite to the rotation direction of the blowing fan.

According to another aspect of the present disclosure, the thickness between the positive pressure surface and the negative pressure surface of each of the plurality of vanes may increase toward the top.

According to another aspect of the present disclosure, each of the plurality of vanes may extend to incline upward with decreasing distance to connection between the first body and the second body.

According to another aspect of the present disclosure, the second body may include a guide wall that extends laterally and faces downward, and the extension direction of each of the plurality of vanes and the extension direction of the guide wall may form an acute angle.

According to another aspect of the present disclosure, each of the plurality of vanes may extend to incline downward with decreasing distance to the connection between the first body and the second body.

According to another aspect of the present disclosure, the second body may include a guide wall that extends upward toward the side, and the extension direction of the plurality of vanes may correspond to the extension direction of the guide wall.

According to another aspect of the present disclosure, each of the plurality of vanes may be curved and convex downward.

According to another aspect of the present disclosure, the upper end of the perimeter wall of the first body and the guide wall may be spaced apart from each other by a predetermined distance in the vertical direction.

According to another aspect of the present disclosure, the second body may extend long toward one side, and the circumference of the upper surface of the second body may be located outside the circumference of the discharge port in the horizontal direction.

Referring to FIG. 1 to FIG. 16, an air cleaner according to an aspect of the present disclosure includes: a first body having an intake port and a discharge port open upward; a blowing fan disposed inside the first body below the discharge port and forming an air flow from the intake port to the discharge port; a blowing motor disposed inside the first body and rotating the blowing fan; and a plurality of vanes disposed at the discharge port, wherein each of the plurality of vanes has a positive pressure surface facing a direction in which air flows, a negative pressure surface opposite to the positive pressure surface, one end connecting the positive pressure surface and the negative pressure surface and forming the length of the vane, and another end opposite to the one end, wherein the thickness between the positive pressure surface and the negative pressure surface may vary from the one end to the other end.

According to another aspect of the present disclosure, the one end is a front end located on a downstream side in an air flow direction, the other end is a rear end opposite to the front end, and the thickness may increase with decreasing distance to the rear end from the front end.

Certain embodiments or other embodiments of the disclosure described above are not mutually exclusive or distinct from each other. Any or all elements of the embodiments of the disclosure described above may be combined with another or combined with each other in configuration or function.

For example, a configuration "A" described in one embodiment of the disclosure and the drawings and a configuration "B" described in another embodiment of the disclosure and the drawings may be combined with each other. Namely, although the combination between the configurations is not directly described, the combination is possible except in the case where it is described that the combination is impossible.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An air cleaner comprising:
a first body having an intake port formed in a perimeter wall and a discharge port open upward;
a filter disposed inside the first body and facing the intake port;
a blowing fan disposed between the intake port and the discharge port to form an air flow from the intake port to the discharge port inside the first body;
a blowing motor disposed inside the first body and rotating the blowing fan; and
a second body disposed above the first body,
wherein the first body includes a plurality of vanes disposed at the discharge port and guiding a flow direction of air discharged from the discharge port, and one end of one of the vanes is inclined to be close to another end of another vane disposed adjacently.

2. The air cleaner of claim 1, wherein the discharge port is an annular discharge port, and the plurality of vanes is radially disposed at the annular discharge port and inclined in a rotation direction of the blowing fan.

3. The air cleaner of claim 2, wherein each of the plurality of vanes is disposed with an inner end inclined at a first angle with respect to a vertical direction and an outer end inclined at a second angle with respect to the vertical direction.

4. The air cleaner of claim 3, wherein the first angle and the second angle are different from each other, and each of the plurality of vanes is twisted.

5. The air cleaner of claim 3, wherein the first angle and the second angle correspond to each other, and each of the plurality of vanes is straighten.

6. The air cleaner of claim 2, wherein each of the plurality of vanes is bent to be convex upward in a longitudinal direction.

7. The air cleaner of claim 2, further comprising guide vanes disposed between the blowing fan and the discharge port inside the first body,
wherein a plurality of guide vanes is disposed radially and inclined in a circumferential direction, and the direction in which the guide vanes are inclined corresponds to the rotation direction of the blowing fan.

8. The air cleaner of claim 2, wherein each of the plurality of vanes has a positive pressure surface facing a direction from which air flows and a negative pressure surface opposite to the positive pressure surface, the positive pressure surface faces downward in the rotation direction of the blowing fan, and the negative pressure surface faces upward in the direction opposite to the rotation direction of the blowing fan.

9. The air cleaner of claim 8, wherein a thickness between the positive pressure surface and the negative pressure surface of each of the plurality of vanes increases toward the upper side.

10. The air cleaner of claim 1, wherein each of the plurality of vanes extends to incline upward with decreasing distance to connection between the first body and the second body.

11. The air cleaner of claim 10, wherein the second body includes a guide wall extending laterally and facing downward, and the extension direction of each of the plurality of vanes and the extension direction of the guide wall form an acute angle.

12. The air cleaner of claim 1, wherein each of the plurality of vanes extends to incline downward with decreasing distance to the connection between the first body and the second body.

13. The air cleaner of claim 12, wherein the second body includes a guide wall extending upward toward the side, and the extension direction of the plurality of vanes corresponds to the extension direction of the guide wall.

14. The air cleaner of claim 12, wherein each of the plurality of vanes is curved and convex downward.

15. The air cleaner of any one of claim 11 or 13, wherein the upper end of the perimeter wall of the first body and the guide wall are spaced apart from each other by a predetermined distance in the vertical direction.

16. The air cleaner of claim 1, wherein the second body extends long toward one side, and the circumference of the upper surface of the second body is located outside the circumference of the discharge port in the horizontal direction.

17. An air cleaner comprising:
a first body having an intake port and a discharge port open upward;
a blowing fan disposed inside the first body below the discharge port and forming an air flow from the intake port to the discharge port;
a blowing motor disposed inside the first body and rotating the blowing fan; and
a plurality of vanes disposed at the discharge port
wherein each of the plurality of vanes has a positive pressure surface facing a direction in which air flows, a negative pressure surface opposite to the positive pressure surface, one end connecting the positive pressure surface and the negative pressure surface and forming a length of the vane, and another end opposite to the one end,
wherein a thickness between the positive pressure surface and the negative pressure surface varies from the one end to the other end.

18. The air cleaner of claim 17, wherein the one end is a front end located on a downstream side in an air flow direction, the other end is a rear end opposite to the front end, and the thickness increases with decreasing distance to the rear end from the front end.
